# EUROPEAN PATENT APPLICATION

(11) **EP 4 171 075 A1**
(43) Date of publication of application: **26.04.2023**
(21) Application number: 21204312.9
(22) Date of filing: 22.10.2021
(51) Int. Cl.: H04W 4/08, H04L 61/5069, H04L 61/4594, H04L 61/4552, H04L 67/1095, H04L 67/306, H04L 9/08

(54) **METHOD FOR SYNCHRONIZATION OF CONTACT INFORMATION**

(71) Applicant: Syncredible GmbH, 85247 Schwabhausen (DE)
(72) Inventor: Dr.(UNC) BAUMGARTNER, Josef, 85247 Schwabhausen (DE); Kovacicek, Damir, 51219 Cavle (HR)
(74) Representative: Maiwald GmbH

(57) **Abstract**

The invention provides a computer-implemented method for synchronization of contact information supporting a group function. The method comprises automatically adding and/or deleting and/or updating, on a respective mobile device of each member of a group of users, contact information of one or more members of the group locally on the mobile device in response to determining that a change in group data has occurred, wherein the group data comprises contact information of each of the members of the group. The server does not know which users are members of the group.

## Description

### Technical Field

The present disclosure relates to a computer-implemented method for synchronization of contact information, a system configured to carry out the method, a computer program product, and a computer readable medium.

### Prior art

Mobile devices increasingly provide functionality that is linked to contacts stored on the mobile device. These contacts are, for example, often managed in a contact management application, which may be an application that serves to edit and access contact information by the user and/or by other applications. Most operating systems have their native contact management applications or the user may use other contact management applications provided by third parties. However, contact information may comprise portions that will generally not stay the same. It is usually up to the user of the mobile device to actively keep the contact information up to date.

Some potential solutions for synchronizing changes in contact information between mobile devices of different users require sharing private information with a third party, e.g. a server that provides a synchronization service, that may not necessarily be trustworthy. When improving privacy, this is usually detrimental in terms of available functionalities of the synchronization, particularly when it comes to group functions.

### Summary of the invention

The invention serves to solve at least some of the above problems. The present invention provides a computer-implemented method for synchronization of contact information supporting a group function, a system, a computer program product, and a computer readable medium according to the independent claims. Preferred embodiments are laid down in the dependent claims.

### General description

The computer-implemented method for synchronization of contact information supporting a group function according to the present disclosure comprises automatically adding and/or deleting and/or updating, on a respective mobile device of each member of a group of users, contact information of one or more members of the group locally on the mobile device in response to determining that a change in group data has occurred, wherein the group data comprises contact information of each of the members of the group. For each member of the group, a group-specific connection data object comprising contact information of the member is stored on a server in encrypted form.

The method comprises, at the respective mobile device of each of the members of the group, downloading and decrypting at least one of the connection data objects. In particular, the method may comprise, at the respective mobile device of each of the members of the group, downloading and decrypting the respective connection data object of one or more, in particular all, of the other members of the group. In particular, the method may comprise downloading and decrypting, at the respective mobile device of each of the members of the group, the respective connection data object of all of the members of the group.

The automatically adding and/or deleting and/or updating of the contact information is carried out in accordance with the contact information comprised in the at least one of the connection data objects, in particular the respective connection data object of one or more, in particular all of the other members of the group, in particular the respective connection data object of all of the members of the group.

The server does not know which users are members of the group.

An advantage brought about by the method of the present disclosure is that each user can efficiently propagate their contact information, particularly changes thereof, to all members of a group, thereby allowing for a wide range of functionalities, including a group function in the context of synchronization of contact information. At the same time, privacy is provided, as the propagation of contact information to all group members does not involve the server knowing any details about the group, particularly, which users are members of the group.

As mentioned above, as an example, the downloading and decrypting the at least one of the connection data objects may comprise downloading and decrypting the respective connection data object of one or more, in particular all, of the other members of the group, in particular all of the members of the group.

In other words, the respective mobile device of each of the members of the group may download and decrypt, for one or more members of the group, in particular for all other or all members of the group, the respective connection data object of each member.

It is to be understood that, for each member of the group, the at least one of the connection data objects downloaded from the server is a connection data object of another member of the group.

In the present disclosure, synchronization of contact information may relate to propagation of modified contact information, the modification of the contact information being made by a first user locally on their mobile device, to the mobile devices of other users. Synchronization may ensure that the contact information stored at the mobile devices of the other users reflects the current contact information stored locally at the mobile device of the first user. In particular, synchronization of contact information may relate to mutual propagation of modified contact information between multiple users, e.g., members of a group. Synchronization, in the context of a group function, may entail automatically propagating modified contact information between the members of a group, automatically propagating contact information of a user that is newly added to a group to the other group members, and/or automatically propagating contact information of the other group members to a user that is newly added to a group.

A group function, in the context of synchronization of contact information, is a function that allows for multiple, particularly more than two, users who are members of a group to propagate, particularly modified, contact information to all other group members collectively.

The method of the present disclosure may support a group function for a group having three or more members.

The contact information of a user, particularly a member of a group, may comprise, for example, name, address, phone number, date of birth, place of work, email address, handles and/or user names for social media, or role within the group. As an example, the role within the group might be "designated driver" and/or "event organizer" and/or "main contact person", or the like.

The term "group of users" refers to a plurality of users, particularly more than two users, wherein each of the plurality of users is a member of the group. In the terminology of the present disclosure, every member of a group is also a user in the sense of the present disclosure. Although, upon creating a group, there may only be one user, i.e., the founding member, for sake of better understanding the term "group" will be used to describe the group in formation.

The group data of the present disclosure may comprise contact information of each member of the group. In particular, it may comprise all of the contact information that is included in the respective connection data objects of each member of the group.

Determining that a change in group data has occurred may comprise that the respective mobile device queries the server as to whether one or more of the connection data objects of the members of the group have changed and/or may comprise, locally at the respective mobile device, comparing group data stored locally on the mobile device and group data comprised in the most recent version of the connection data object(s).

The connection data object may be any data structure comprising contact information of a user. The connection data object is group-specific. This may mean that the user has a different connection data object for each group of which the user is a member. Thus, the contact information shared with members of one group may differ from the contact information shared with the members of another group. This is described in more detail further below. The term "connection data object" serves to illustrate that the data object is associated with a specific group, which in turn may be associated with a group connection, as will be outlined in detail further below. It is noted that the method may optionally comprise a step that allows the user to share the same set of contact information with multiple groups. In this case, the contact information contained in the connection data objects may overlap or even be the same, but there will still be different connection data objects for each of the user's group.

The connection data object of a user may be configured such that it does not comprise information as to the other group members, in particular, such that it does not comprise information which users are members of the group and such that it does not comprise the contact information of the other group members. Thus, in case there is some sort of error that leads to the server being able to access the data encrypted in the connection data object of one of the members of the group, it will still not be able to determine the other group members or their contact information.

As will be described in more detail below, the method of the present disclosure may comprise modifying, locally on the mobile device of a user, the contact information of the user in response to a user input, particularly a user input via an application running on the mobile device. The user input may prompt the mobile device to store additional contact information and/or remove contact information and/or update contact information of the user locally on the mobile device, e.g., replace older contact information with more recent contact information of the user. The modifying of the contact information may comprise modifying a contact information entry of a contact management application, for example.

The method may comprise, locally at the mobile device of a user, modifying the connection data object of the user so as to comprise modified contact information, e.g. contact information modified as described above. In particular, the connection data object may be modified in such a way as to comprise the most recent contact information of the user. When the connection data object comprises modified contact information, it may also be referred to as a modified connection data object.

According to the present disclosure, adding and/or deleting and/or updating of the contact information may be carried out in accordance with the contact information comprised in the connection data object(s), in particular the modified contact information comprised in the modified connection data object(s), of one or more of the other group members. This may mean that any changes made to the locally stored contact information, i.e., any additions and/or deletions and/or updates, reflect the, particularly modified, contact information comprised in the connection data object(s). As seen above, the connection data object of a user, and accordingly each of the group members, may comprise the most recent contact information of the user, such that the adding and/or deleting and/or updating will be in accordance with the most recent contact information of the other group members as well.

Automatically adding and/or deleting and/or updating contact information may entail that no user input is required at all. It may also entail, however, automatically prompting the user of the mobile device to confirm, by means of a user input, that adding and/or deleting and/or updating is to be carried out, particularly prior to overwriting and/or deleting a portion of the locally stored contact information. The method may then comprise adding and/or deleting and/or updating contact information only after receiving the use's confirmation.

As an example for deleting contact information, for example, if a user no longer has a certain role within the group or even leaves the group, the information as to the role within the group may be locally deleted on the mobile devices of each of the members of the group.

Automatically updating and/or deleting contact information locally may be performed only after automatically prompting the user to confirm that information should be deleted and receiving the user's confirmation. In that way, it may be avoided that a loss of information occurs accidentally, for example, if another member of the group accidentally submits empty fields in the contact information they share with the group.

Adding and/or deleting and/or updating contact information may comprise adding a contact information entry, e.g. of a contact management application, and/or adding contact information to the contact information entry and/or deleting contact information from the contact information entry and/or updating, e.g., replacing, contact information in the contact information entry. The adding and/or deleting and/or updating contact information may affect one or more fields of the contact information entry. Using the method of the present disclosure, contact information entries may be selectively edited so as to comprise the most recent group data, in particular the most recent contact information of all of the group members. It is to be understood that, e.g. as an example of the selective editing, the method of the present disclosure may entail that portions of the locally stored contact information that are the same as the information in the connection data object are not edited.

In the present disclosure, each connection data object may be encrypted with a connection key. The connection key may be a group-specific and, accordingly, a connection-specific key. This means, that in case of multiple groups and, accordingly, multiple group connections, each group, accordingly, each group connection has its own connection key that differs from the connection keys of all the other groups and, accordingly, group connections. The connection key may, for example, be a symmetric key. The connection key may, for example, be created upon creating the group and subsequently be provided to each of the group members. The connection key may be provided to each group member encrypted with the respective public key of the group member.

It is to be understood that each of the connection data objects is stored on the server only in encrypted form.

Encrypting and decrypting the connection data objects of the members of the group may be performed, e.g. at the mobile devices, using the connection key.

Each connection data object may be locally encrypted with the connection key and, subsequently, the encrypted connection data object may be uploaded to the server. The connection data object may subsequently be downloaded to a mobile device of a group member and be decrypted locally with the connection key.

In other words, the method of the present disclosure allows that the server does not have access to the content of the connection data objects. The server, for each group, may store the respective connection data objects of all members of the group. However, since the content of the connection data objects is encrypted, the server may for example not know the user associated with a connection data object. Accordingly, the server also does not know which users are members of a group. The server, in particular, does not know the composition of the group, i.e., all the users that are members of the group.

The method may comprise that all connection data objects associated with a group are stored, in encrypted form, on the server in a folder and that the whole folder, optionally packed into a single file, may be downloaded to the respective mobile device of each member of the group in response to a query sent from the respective mobile device to the server. Such a query may be sent at regular intervals and/or at predetermined times and/or prompted by a user input and/or prompted by trigger events, for example, when a predetermined application is opened and/or upon a connection between the mobile device and the server being established. Alternatively or in addition, the server may send a notification to each mobile device whenever a change occurs in any of the connection data objects stored on the server. In response to the notification, the user's mobile device may query the server to provide connection data objects, in particular only connection data objects for a subset of connections and/or only connection data objects that have been changed and/or newly added. The mobile device may determine the subset of connections so as to query the server to provide at least, particularly exclusively, connection data objects associated with groups of which the user is a member.

An application may be configured to perform at least part of, in particular all of, the method steps that are performed at and/or by and/or using the mobile device, as described in detail further below.

The method may be seen as providing a service for synchronization of contacts. The method may comprise that a user signs up for the service via the/an application that may be executed on their mobile device.

As an example, a user signing up to the service, also referred to as registration process, may enter their phone number via a user input element of the user's mobile device. Optionally, a validation step may be performed using known methods, for example provided by the server platform used for providing the service. The signing up may further comprise, optionally after validation, generating a random account ID associated with the phone number, a user-specific symmetric account key, and a public-private key pair. The user-specific symmetric account key may be used to encrypt and decrypt the user's personal data. The user-specific symmetric account key may be encrypted with the public key and stored under the user's account on the server. All data under the user's account may, as already mentioned, be encrypted with the user-specific symmetric account key. As an example, the private and public keys may be created from a passphrase and, using the passphrase, identical key pairs can be generated that would allow the user to log back into their account. A list of all connection keys of groups that the user is a member of, may be stored under the user's account. Accordingly, the connection keys may be encrypted with the user-specific symmetric account key. As such, even though all members of a group have stored, under their account, the connection key of the group, the data representing the same connection key may be different for each member of the group. Alternatively or in addition, a collection of requests may be stored under the user's account on the server. Requests may serve to exchange messages between users. The potential use of requests in the context of the method of the present disclosure will be explained in more detail below.

Alternatively to encrypting and decrypting the data under the user's account, in particular the user's personal data, with a user-specific symmetric account key, the user's personal data and private data may be encrypted only with the user's public key and decrypted with the user' private key. In this case, the signing up may not comprise creating a user-specific account key.

The above-mentioned mobile device may, for example, comprise a mobile phone and/or a tablet computer and/or a notebook. In particular, the mobile device may be a computing device that supports mobile communication.

The method of the present disclosure may provide a single encrypted group connection based on a one-on-one connection model, also referred to herein as a one-on-one group connection. This is in contrast to providing a group functionality via multiple one-on-one connections between only two users, respectively, each connection encrypted with a different key. The group connection may be considered as being a single connection connecting all members of the group. The group connection is herein referred to as being associated with the group and the group members are herein referred to as being associated with or connected to the group connection.

A single encrypted group connection can be understood as allowing for more than just two users communicating with each other using only a single connection key for encryption. This is in contrast to known group functionalities where the group functionality is realized by multiple one-on-one connections between two users respectively, each connection with its own key. The advantage of a single encrypted group connection based on a one-on-one connection model is that it is possible to ensure privacy while also allowing for improved data-propagation between the group members. In particular, propagating updated contact information to all members of a group with any of the known methods would involve a reduced level of privacy, as the server would have to know all users that are members of the group, and/or would require the users to actively prompt sharing modified contact information with select users. Moreover, the method of the present disclosure allows for automatically sharing contact information even between users within a group that had not previously exchanged any contact information.

The method may comprise synchronizing contact information by means of the single encrypted group connection. The synchronizing may comprise that the mobile device of each of the members of a group pushes encrypted connection data objects including the most recent contact information of a user to a server and that the mobile device of each of the users actively queries the server to receive encrypted connection data objects of the members of the groups of which the user is a member from the server.

As can be seen from the above, a modification of contact information of one of the members of the group, i.e., a modification of the group data, may affect all members of the group collectively. Each member may be considered as listening for changes across the entire group connection. According to the method of the present disclosure, a synchronization may be performed that automatically affects all members of the group.

The method of the present disclosure may comprise, after downloading the at least one of the connection data objects from the server, for each downloaded connection data object, determining whether it comprises modified contact information, and, in response to determining that the connection data object comprises modified contact information, carrying out the automatically adding and/or deleting and/or updating of the contact information of the member whose connection data is comprised in the connection data object.

As an example, the method may comprise determining, for each connection data object downloaded from the server whether the connection data object comprises modified contact information.

As an example, a user of a respective mobile device may be a member of one or more groups and the mobile device may have stored thereon one or more connection IDs, each identifying one of the groups.

The method may include that the mobile device may query the server whether a change has occurred in the group data of any of the groups, e.g., by sending a request including the respective connection ID identifying each group. In response, the server may indicate all modified connection data objects and the mobile device may download all modified connection data objects. Alternatively or in addition, the mobile device may download all connection data objects of a group in which a change has occurred in the group data, which may include, in addition to any modified connection data objects, connection data objects that have not been modified.

As briefly mentioned above, the method of the present disclosure may comprise, at the mobile device of at least one member of the group, modifying the connection data object of the at least one member of the group by modifying at least a portion of the connection data of the at least one member, so as to obtain a/the modified connection data object, encrypting the modified connection data object, and uploading the modified connection data object to the server in encrypted form.

This allows for a member of the group to push, particularly modified, contact information to the other members of the group. It is noted that the modified contact information will only be available to members of the group, as other users do not have the connection key for decrypting the connection data object.

Prior to modifying the connection data object of the at least one member of the group, the method may comprise downloading the connection data object of the at least one member of the group from the server, decrypting the connection data object. Thus, the at least one member can make modifications directly in the downloaded connection data object, for example instead of creating a new connection data object.

It is noted that in case a user is a member of a plurality of groups, the user may be prompted to select, via a user input, which groups should be informed of the modified contact information, optionally including a "select all" user input. Upon receiving the user input, for each of the selected groups an/the encrypted modified connection data objects for different groups may be provided to the server, each modified connection data object being encrypted with a different key, i.e., the respective connection key.

As an example, in response to the contact information of a first member of the group being modified on the mobile device of the first member, the connection data object of the first member may modified so as to comprise the modified contact information. Thus, a modified connection data object is obtained. The modified connection data object may be encrypted, e.g. using the connection key, and the encrypted modified connection data object may be uploaded to the server. The method may comprise, at the respective mobile device of each of the members of the group, downloading the modified connection data object of the first member from the server and decrypting the modified connection data object of the first member. The automatically adding and/or deleting and/or updating of the contact information is carried out in accordance with the modified contact information comprised in the connection data object of the first member. As mentioned above, the method may comprise determining, for each downloaded connection data object, determining whether it comprises modified contact information. For example, the mobile device of a user may determine that the contact information of the first member is modified when the mobile device determines that the contact information of the first member comprised in the connection data object of the first member does not correspond to the contact information of the first member stored locally on the mobile device and/or when the mobile device determines that the contact information of the first member included in a previous connection data object of the first member does not correspond to the contact information of the first member included in the most recent connection data object of the first member.

As mentioned above, the connection data object may be encrypted with a connection key. The connection key may be provided to a user as part of a request to join the group.

The request to join the group may optionally be encrypted using a public key of the user receiving the request to join the group and/or may optionally comprise a signature to validate that the request originates from the requesting user. The request may comprise all data required to participate in the group connection, for example the connection key and the connection ID. The request may be created locally on the mobile device of the requesting user and, in encrypted form, provided to the server. The server may store the request under the account of the user receiving the request to join the group, e.g., in a request collection stored under the account. The request may then be downloaded and decrypted by the mobile device of the user receiving the request to join the group. The encrypted request may be deleted from the server at a later point in time, for example after the request has been downloaded or after a predetermined expiry period or time.

As an example, any member of the group having permission to add members to the group may send a request to join the group, also referred to as an invitation in the present disclosure. Members having this permission are also referred to as administrators of the group in the present disclosure. The user receiving the request to join the group may decrypt the request using their private key. As an example, the public key of the users may be stored on the server together with their phone number and/or user ID on the server, for example upon signing up of the user.

The method may comprise creating the group. Creating the group may comprise, in response to a first user requesting to create a group, creating a first group-specific connection data object including the contact information of the first user, creating a connection ID identifying the group, creating a/the connection key, encrypting the first group-specific connection data object with the connection key, uploading the encrypted first group-specific connection data object to the server, and adding one or more users to the group.

Creating of the group may be prompted by a user input received at the mobile device of the first user, particularly via the/an application. For example, the first user may provide user input to start creating a group, input a group name, input and/or select contact information to be included in the first group-specific connection data object, e.g. the user's name, and select other users to be invited to join the group. The steps of creating the connection ID, the connection key, and the connection data object may be performed automatically after the required user input has become available. Upon group creation, the first user may also already assign administrator privileges to other users invited to join the group.

Creating a group may comprise creating a secret key. The secret key may, for example, only be available to the first user and optionally, in addition may be made available to one or more other members of the group by the first user designating said one or more other members as administrators of the group. The secret key may be a key that allows for a user having access to the secret key to add members to the group, in particular, to provide the connection key and/or the request to join the group to another user. Each user that has the secret key may enable other users to join the connection. Only users having access to the secret key may be able to add members to the group. The server may use the secret key to verify whether a member of a group is authorized to add members to the group. The secret key may be a key that allows for creating the connection key. In particular, the connection key may be a key that can only be created and provided to other users by a user having access to the secret key.

The method of the present disclosure may comprise, for example as part of or subsequently to creating the group, adding at least a second user to the group, wherein adding the second user to the group comprises sending a request to join the group to the second user, the request to join the group being encrypted using a public key of the second user and comprising a/the connection key and optionally a signature of the requesting user, in particular the first user.

The requesting user, in particular the first user, may for example be any member of the group having access to the secret key, i.e., any administrator. The request may be sent in response to user input of the group member, e.g., input that comprises selecting a phone number or a user ID of the second user. In this scenario, adding the second user is initiated by a group member, e.g., by way of an invitation. Alternatively or in addition, adding the second user may be initiated by the second user. That is, the method may comprise, at the mobile device of the second user, i.e. a user wishing to join a group, receiving a user input prompting the mobile device to send a request comprising at least one of the second user's name, phone number, and userlD. The second user may cause the mobile phone to send the request by selecting a contact from contact information locally stored on their mobile device and/or the connection ID and/or any other identifier identifying the group and/or by scanning a QR code that comprises information that allows for automatically generating and sending the request to join a group. For example, the QR code may contain the userlD of an administrator of the group. In this case, after scanning the QR code, the second user wishing to join the group may send a request including contact information of the second user to the administrator. The administrator may then decide whether or not the second user may join the group and, if so, the second user will be added as a group member. For example, the user may then be provided with the connection key and optionally the connection ID. The scenario where the second user initiates joining the group may, for example, rely on users talking or otherwise exchanging information about the group, such that the second user is aware of the existence of the group and may initiate being added as a member of the group.

A QR code may also be used by a user to share, by publicly sharing the QR code, their contact data, for example for sharing data with customers and/or potential customers and/or business contacts, such that the user may be added to a group by anyone having access to the QR code.

As mentioned above, the method may comprise, for example as part of or subsequently to creating the group, adding at least a second user to the group. In addition or alternatively to the steps described above in the context of adding a second user, adding the second user to the group may comprise, at the mobile device of the second user, receiving a/the request to join the group, decrypting the request to join the group using a private key of the second user, and receiving a/the connection key. The method may optionally comprise, after the second member has been added to the group, at the mobile device of the second user, downloading and decrypting the connection data object of each of the other members of the group and may optionally further comprise automatically adding and/or deleting and/or updating contact information of one or more of the other members of the group locally on the mobile device of the second user.

In addition or alternatively to the steps described above in the context of adding a second user, adding the second user to the group may comprise, at the mobile device of the second user creating a connection data object and adding contact information of the second user to the connection data object, encrypting the connection data object using a/the connection key, and uploading the connection data object to the server in encrypted form. As mentioned above, the method may optionally comprise, after the second member has been added to the group, at the mobile device of the second user, downloading and decrypting the connection data object of each of the other members of the group and may optionally further comprise automatically adding and/or deleting and/or updating contact information of one or more of the other members of the group locally on the mobile device of the second user.

In the present disclosure, the second user is considered to have joined the group once the second user's group-specific connection data object has been uploaded to the server. Optionally, in case the second user does not join the group after receiving the request including the connection key, the connection key may be automatically discarded, for example after a predetermined period of time.

The method of the present disclosure may comprise after adding a/the second user to the group, automatically determining, on the respective mobile device of each member of the group, whether a contact information entry comprising at least some contact information of the second user is locally stored on the mobile device. The method may comprise, in case it is determined that a contact information entry comprising at least some contact information of the second user is locally stored on the mobile device, automatically adding information indicating that the second user is a member of the group to the contact information entry and optionally automatically adding contact information of the second user to the contact information entry and/or deleting and/or updating at least a portion of the contact information of the second user comprised in the contact information entry. The method may further comprise, in case it is determined that no contact information entry comprising at least some contact information of the second user is locally stored on the mobile device, automatically creating a contact information entry for the second user to be locally stored on the mobile device and adding the contact information of the second user comprised in the connection data object to the contact information entry for the second user, and automatically adding information indicating that the second user is a member of the group to the contact information entry. In the present disclosure, the term "contact entry" is used interchangeably with the term "contact information entry".

As such, the method allows for seamless integration in pre-existing contact management applications. It also allows for having a complete set of data without creating a significant amount of overhead data.

For example, when a contact information entry already exists for the second user, any data included in the connection data object and missing from said contact information entry can be added to the contact information entry and/or any pre-existing data can be updated with the data included in the connection data object. It is presumed that the data included in the connection data object is more recent than the pre-existing data. It is to be understood, as already mentioned above, that any deleting or overwriting of pre-existing data may be performed only upon user confirmation.

When no contact information entry exists for the second user, then a new contact information entry may automatically be created and data from the connection data object may automatically be added to the new contact information entry. As such, when a user joins a group, this may lead to new entries being automatically created on the mobile devices of one or more group members.

The method of the present disclosure may comprise, upon adding the second user to the group, on the mobile device of the second user, automatically determining, for each of the other members of the group, whether a contact information entry comprising at least some contact information of the other member is locally stored on the mobile device. The method may comprise, in case it is determined that a contact information entry comprising at least some contact information of the other member is locally stored on the mobile device, automatically adding information indicating that the other member is a member of the group to the contact information entry and optionally automatically adding contact information of the other member to the contact information entry and/or deleting and/or updating at least a portion of the contact information of the other member comprised in the contact information entry. The method may further comprise, in case it is determined that no contact information entry comprising at least some contact information of the other member is locally stored on the mobile device, automatically creating a contact information entry for the other member to be locally stored on the mobile device and adding the contact information of the other member comprised in the connection data object to the contact information entry for the other member, and automatically adding information indicating the other member is a member of the group to the contact information entry.

As such, the method allows for seamless integration in pre-existing contact management applications. It also allows for having a complete set of data without creating a significant amount of overhead data.

For example, when a contact information entry already exists at the mobile device of the second user for another group member, any data included in the connection data object of said other group member and missing from said contact information entry can be added to the contact information entry and/or any pre-existing data can be updated with the data included in the connection data object. It is presumed that the data included in the connection data object is more recent than the pre-existing data. It is to be understood, as already mentioned above, that any deleting or overwriting of pre-existing data may be performed only upon user confirmation.

When no contact information entry exists for the other group member on the mobile device of the second user, then a new contact information entry may automatically be created and data from the connection data object may automatically be added to the new contact information entry. As such, when the second user joins a group, this may lead to one or more new entries being automatically created on the mobile devices of the second user.

In the present disclosure, automatically adding and/or deleting and/or updating contact information may comprise creating and/or editing a/the contact information entry in a contact management application, the adding and/or deleting and/or updating being performed taking into account the data model of the contact management application. For example, the contact management application may be a native contact management application of the operating system of the mobile device and/or any other contact management application with an application programming interface (API) to read and write contact information.

A user will thus not have to access to the application used for creating and/or joining a group in order to view and/or use the most recent contact information of the group members, but may rather access the information in the address book they usually use. In other words, the user does not need to use the application as an address book or contact management application in addition to or instead of any other contact management application they use regularly, for example the native contact management application of the operating system. Instead, the claimed method may keep the data accessed via the native contact management application up to date. This reduces an overhead of locally stored data that is required for managing contacts and allows for improved overall integration in the mobile device, as there are usually several applications that interact with the, particularly native, contact management application, such that, via the contact management application, the method can be seamlessly integrated with the other functions and applications of the mobile device.

In more detail, a contact management application usually provides several fields for data entry, for example for the first and last name, addresses, phone numbers, email addresses, birth date and others. These are also referred to as types of contact information. The method may access these fields and store the contact information from the connection data object in the respective fields. The content stored in a field is referred to as a value. In case the contact management application does not have a field that is designated for a portion of the contact information from the connection data object, another field may be repurposed. For example, a field that is designated for notes pertaining to a contact may be used to store information as to the role of a group member within the group.

The present disclosure also provides a system configured to carry out the method of the present disclosure.

In particular, the system may comprise a server. The server may be configured to store, for a plurality of users, a respective user ID and a phone number. Alternatively or in addition, the server may be configured to provide the respective public key associated with each of the users to allow for encrypted communication with each user. Alternatively or in addition, the server may be configured to receive and store the encrypted connection data objects for one or more groups, the connection data objects being stored so as to be retrievable by means of the connection ID identifying the respective group and the associated group connection. For example, the server may be configured to receive queries from mobile devices indicating a connection ID and provide one or more of the connection data objects associated with the connection ID to the querying mobile device. Alternatively or in addition, the server may also be configured to store the secret key associated with the group. Alternatively or in addition, the server may be configured to store one or more requests sent to and/or sent by a user, e.g., as part of an account of the user. The account may also comprise the phone number and/or user ID of the user.

The server may be configured to communicate with mobile devices of the users, particularly, to send and receive any requests involved in the methods described above.

Alternatively or in addition, the system may comprise, at least one mobile device configured to perform the steps of the method described herein as being performed at and/or by and/or using the mobile device. In particular, one or more of these steps may be performed by an application running on the mobile device. For example, the application may be configured to notify the user of changes in a group and/or to receive user input to modify their contact information and/or to receive user input to create a group and/or to add a member to a group and/or to request to be added to a group and/or to confirm a request to join a group and/or to confirm that contact information may be added and/or deleted and/or updated. Alternatively or in addition, the application may also be configured to perform encryption and decryption of requests and/or of communication data objects. Alternatively or in addition, the application may also be configured to communicate with a server, in particular, to upload and/or download encrypted connection data objects and/or requests. Alternatively or in addition, the application may be configured to automatically query the server for group data, particularly connection data objects, of any groups that the user is a member of. Optionally, additional queries for other groups that the user is not a member of may be sent for improved privacy.

The present disclosure also provides a computer program product comprising instructions which, when the program is executed by a computing system, cause the computing system to carry out the method of the present disclosure.

The present disclosure also provides a computer-readable medium comprising instructions which, when executed by a computing system, cause the computing system to carry out the method of the present disclosure.

Advantages and features outlined in the context of the method in the present disclosure similarly apply to the system, computer program product, and computer readable medium of the present disclosure.

Further embodiments, examples, and advantages will be outlined below in the context of the detailed description making reference to the Figures, wherein
- Figure 1: shows a schematic view of an exemplary system;
- Figure 2: shows a flow diagram illustrating method steps relating to a user modifying their contact information and propagating the modifications;
- Figure 3: shows a flow diagram illustrating method steps related to locally adding and/or deleting and/or updating contact information when group data has been modified;
- Figure 4: shows a flow diagram illustrating method steps related to creating a group and/or modifying the composition of the group;
- Figure 5: illustrates schematically a one-on-one group connection;
- Figure 6: illustrates schematically, as a contrast to the one-on-one group connection of the present disclosure, multiple one-on-one connections within a group; and
- Figures 7a to 7f: illustrates how data may be stored on the server.

### Detailed description

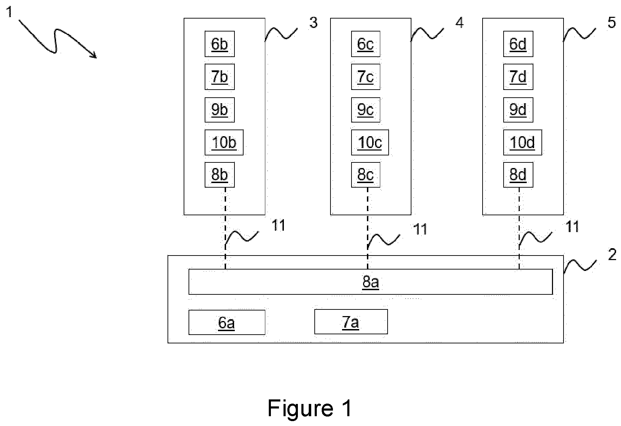

In Figure 1, an exemplary system 1 according to the present disclosure is shown. The system 1 comprises a server 2 and three mobile devices 3, 4, and 5 of a first, second, and third user, respectively. It is noted that the number of mobile devices is only used for illustrative purposes. In principle, a method according to the present disclosure can also be performed with any number of mobile devices, i.e., less than or more than three mobile devices.

Each of the server and the mobile devices is shown as comprising a memory 6a to 6d, a processing unit 7a to 7d, and a communication interface 8a to 8d, which may be configured to establish a wired and/or wireless data connection. Each of the mobile devices is also shown as having a display 9b to 9d and a user input interface 10b to 10d. In the present case, the user input interface may be configured as a touch based user input interface that is incorporated in the display. However, other user input mechanisms are conceivable. The data connections are shown as dashed lines 11.

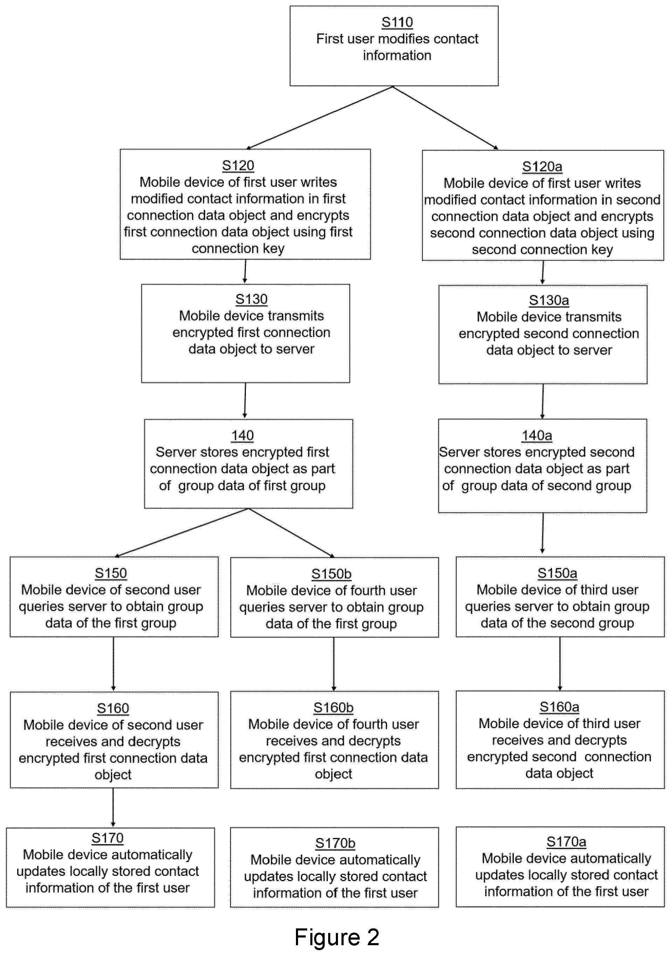

In the following, making reference to the Figures 2 to 4 that show flow diagrams, exemplary steps of the method of the present disclosure are described for illustrative purposes. It is noted that the invention is not limited to, particularly, does not necessarily include all of, the steps outlined below. Moreover, the steps may, but do not have to be, performed in the order described below.

In Figure 2, an exemplary flow diagram including method steps relating to a user modifying, in this exemplary case, updating, contact information is shown.

In step 110, on their mobile device, a first user modifies their contact information, for example changes their email address. Other examples of modifications may be adding or removing information, for example, adding or removing a role of the user within the group.

In step 120, the mobile device writes the modified contact information in a first group-specific connection data object and encrypts the first group-specific connection data object with a first connection key associated with a first group. In optional step 120a, the mobile device writes the modified contact information into a second group-specific connection data object and encrypts the second group-specific connection data object with a second connection key associated with a second group.

In step 130, the mobile device transmits the encrypted first connection data object to a server. In optional step 130a, the mobile device also transmits the encrypted second connection data object to the server.

In step 140, the server stores the encrypted first connection data object as part of the group data of the first group. In optional step 140a, the server stores the encrypted second connection data object as part of the group data of the second group.

In step 150, a mobile device of a second user queries the server to obtain the group data of the first group. In optional step 150a, a mobile device of a third user queries the server to obtain the group data of the second group.

In step 160, the mobile device of the second user receives and decrypts the encrypted first connection data object. In optional step 160a, the mobile device of the third user receives and decrypts the encrypted second connection data object.

In step 170, the mobile device of the second user automatically updates locally stored contact information of the first user, that is, in this example, replaces the email address of the first user. Optionally and not shown here, the mobile device of the second user may prompt the second user to confirm that the email address of the first user should be replaced.

In optional step 170a, the mobile device of the third user automatically updates locally stored contact information of the first user, that is, in this example, replaces the email address of the first user. Optionally and not shown here, the mobile device of the third user may prompt the second user to confirm that the email address of the first user should be replaced.

As can be seen above, when the first user changes their contact information, this change will be propagated to a member of the first group and, in case the optional steps are performed, to a member of a second group. The same principle applies for all members of the respective groups. The connection data objects for the first and second group are encrypted with different connection keys. The first user may choose to share some changes only with some of their groups. For example, the first user may not wish to propagate a change in their private email address to a group that comprises work contacts.

Figure 2 also shows optional steps S150b, S160b, and S170b illustrating how modified contact information is propagated to yet another member of the first group, i.e., the fourth user.

The method can be extended for more than two groups and for any number of members within a group.

Optionally, the method may comprise a step that allows the user to select settings that determine which changes of the user's contact information are to be propagated to which group and/or that a user confirmation is required before updated contact information are shared with the group. The user confirmation may be for all groups collectively or for some or all groups individually.

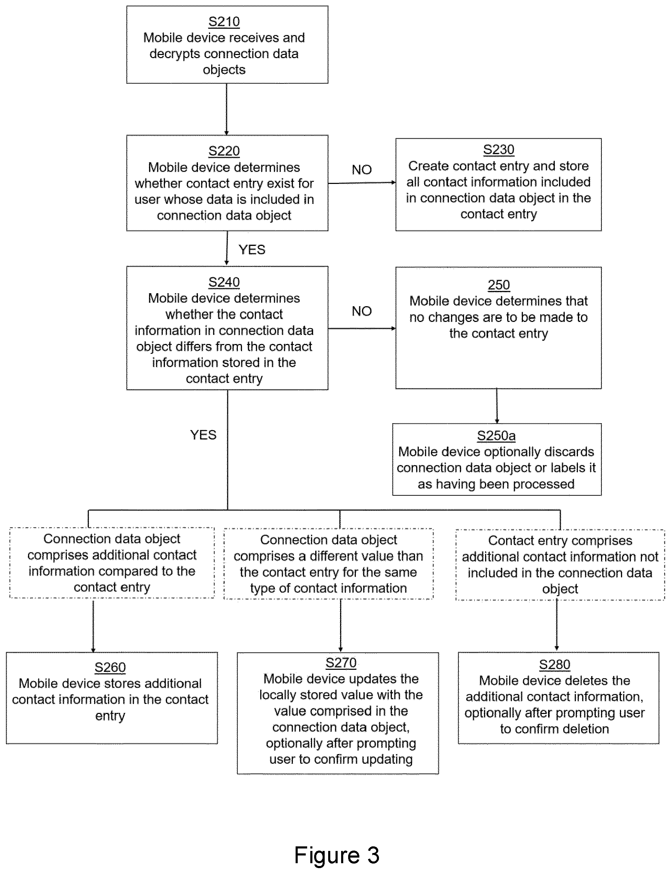

In Figure 3, an exemplary flow diagram is shown to illustrate how the adding and/or deleting and/or updating of contact information may be performed. For example, the above step 170 may contain one or more of the steps shown in Figure 3.

In step 210, the mobile device receives and decrypts a plurality of connection data objects associated with a group connection.

In step 220, for one of the connection data objects, the mobile device determines whether a contact entry exists for the user whose contact information is included in the connection data object.

If a contact entry does not exist, in step 230, the mobile device creates a contact entry and stores all contact information included in the connection data object in the contact entry.

If a contact entry does exist, in step 240, the mobile device determines whether the contact information in the connection data object differs from the contact information stored in the contact entry.

If it is determined that the connection data of the connection data object and the contact entry do not differ, in step 250, the mobile device determines that no changes are to be made to the contact entry. The connection data object may optionally be discarded or labelled as having been processed in step S250a.

If it is determined that the connection data object comprises additional contact information compared to the contact entry, the additional contact information is stored in the contact entry in step 260.

If it is determined that the connection data object comprises a different value than the contact entry for the same type of contact information, e.g., a different last name in the "last name" contact information type, the mobile device may update the locally stored value with the value comprised in the connection data object in step 270. Optionally, the mobile device may only update the locally stored value after prompting the user to confirm that the value should be updated and after receiving the user's confirmation. Optionally, the mobile device may prompt the user to select whether to update the value or create an additional value to be stored alongside the preexisting value or to refrain from storing the value comprised in the connection data object.

If it is determined that the contact entry comprises additional contact information not included in the connection data object, in step 280, the mobile device may delete the additional contact information. Optionally, the mobile device may only delete the additional contact information after prompting the user to confirm that the value should be updated and after receiving the user's confirmation.

It is noted that steps 260, 270, and 280 are not mutually exclusive, since modified contact information may include multiple modifications of the contact information. The steps 220 to 280 may be repeated for each of the connection data objects received in step S210, for example.

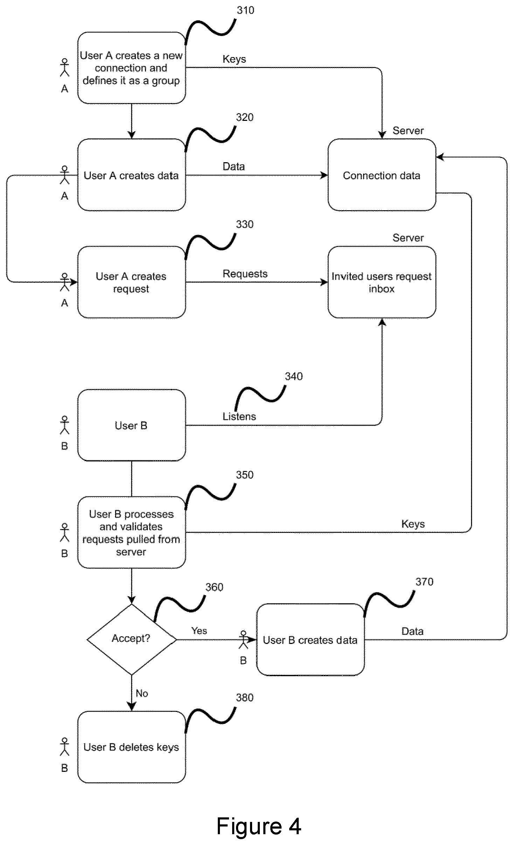

In Figure 4, an exemplary flow diagram including method steps relating to creating a group and/or modifying the composition of the group is shown.

In step 310 user A creates a new connection, in other words, creates a group. The user may give a name to the group. A connection ID, a secret key, and a connection key will automatically be generated.

In step 320 user A creates their data. For example, the user selects contact information to be added to the group-specific connection data object of user A.

In step 330 user A creates requests to add users to the group, i.e., creates invitations to join the group. As indicated by the arrows, the keys, the data created by user A, i.e., the connection data object, and the requests created by user A are sent to a server. The keys and data are saved in a data structure containing the connection data of the group. The requests are added to a data structure, e.g. a request inbox, containing an invited user's requests.

In step 340, invited user B listens to their request inbox and in step 350 user B locally processes and validates requests pulled from the server, e.g., from the request inbox. This may include decrypting a request using user B's private key and optionally checking the signature of the request to verify its origin. User B can use the connection key stored on the server to read the connection associated with the group.

In step 360, the user B determines whether or not to accept the request. If so, in step 370, user B creates their data, more specifically, adds data to their connection data object, and sends the connection data object, encrypted with the connection key, to the server, more specifically to the data structure containing the connection data of the group. If user B does not accept the request, in step 380 the keys associated with the connection/group are deleted.

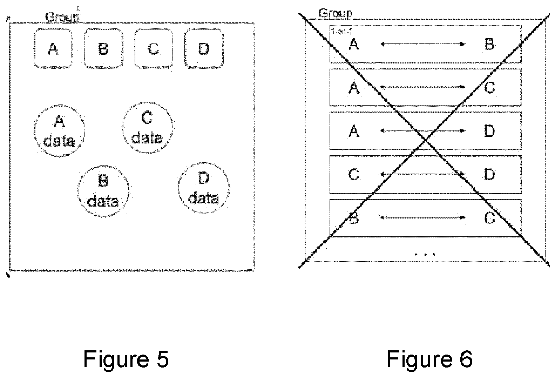

Figure 5 illustrates schematically a one-on-one group connection in accordance with the present disclosure, wherein users A to D and their contact information, e.g., their connection data objects, are all included within a single encrypted connection encrypted with only one key.

Figure 6 illustrates schematically, as a contrast to the single one-on-one group connection of the present disclosure, multiple one-on-one connections within a group, where each member of the group has a separate one-on-one connection with each of the other members of the group, each encrypted separately.

As an example, for establishing a group connection a user may generate a secret key, a connection ID, a symmetric connection key for encryption and decryption of group data, a datalD of the connection creator, a data ID for each other uses to be added to the connection, a signature that allows the user to add their data, wherein the signature may be based on a secret key. For each user to be added to the connection, the symmetric connection key, the datalD of the respective other user, and the signature are sent to the respective user to be added. A parameter may also be sent that states that the connection is a one-on-one group connection. The secret key may be sent as well, but it may only be sent to users intended to be administrators of the group connection.

The symmetric connection key may be used for decryption and encryption by each member of the connection, i.e., it allows for the users to read and write group data. The secret key, which may only be available to selected members, e.g., administrators, may be used for adding and/or deleting members.

It is noted that each user invited to be a group member adds their data to the group data, by way of their group-specific connection data object, upon acceptance of the request/invitation.

In contrast to the above, if a group were based on multiple one-on-one connections between two users, respectively, the connections would each be protected by different keys. This would not allow for efficient propagation of changes of a group member to all other group members without the server knowing which users are members of the group.

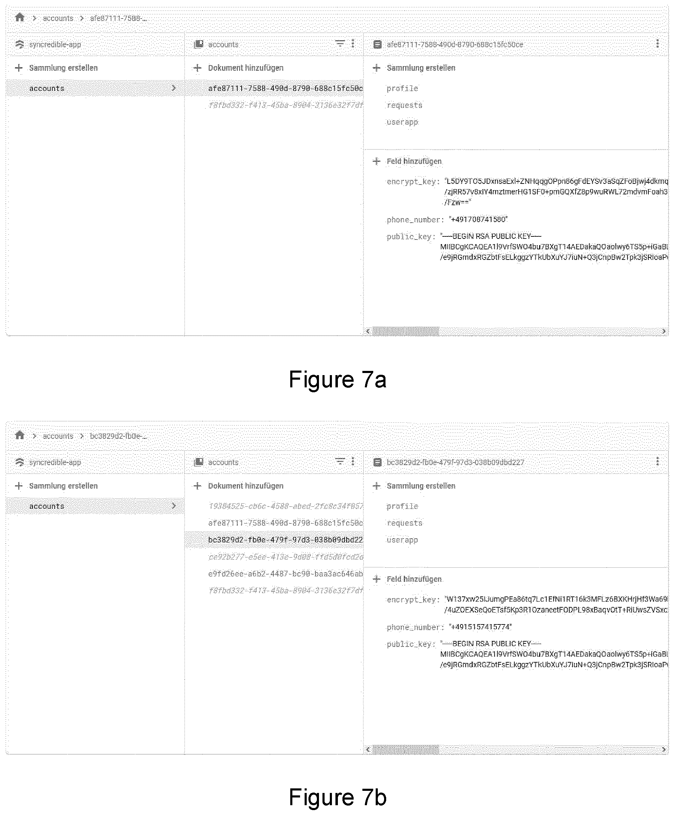

Figures 7a to 7f illustrate how data may be stored on the server.

Specifically, in Figure 7a a state where data associated with a user account having an account ID ("afe87111...") is stored on the server is shown. In this example, the phone number and public key of the user associated with the account are also stored on the server. Furthermore, the user's user-specific symmetric account key may be stored on the server in encrypted form, e.g. encrypted using the user's public key. Figure 7b shows a state where data associated with multiple user accounts is stored on the server.

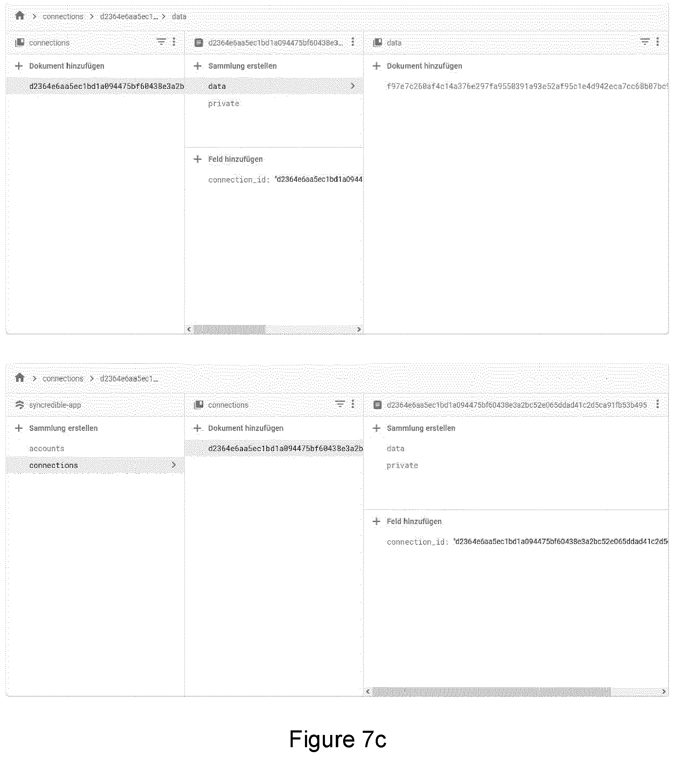

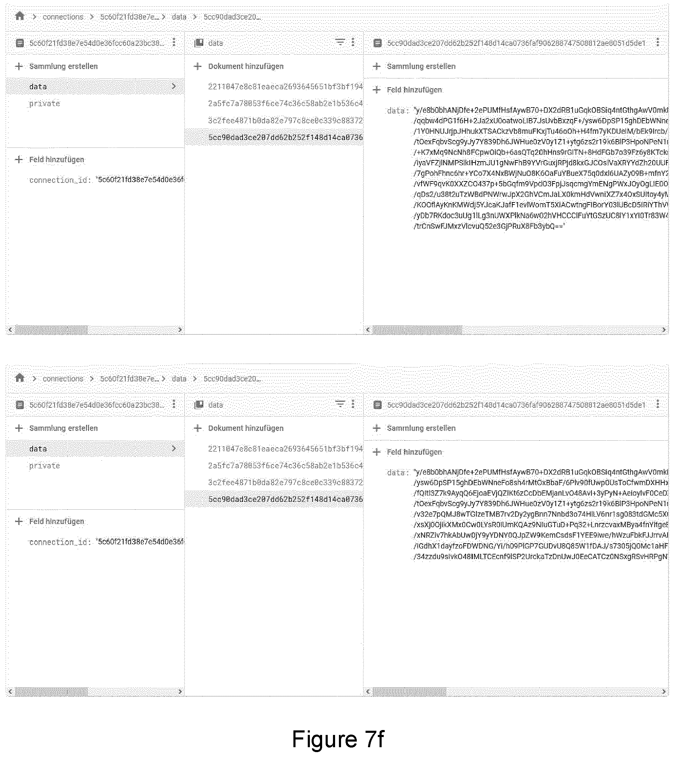

Figure 7c shows a state where a group has been created. As explained above, the method of the present disclosure provides a group connection. Therefore, the group is stored in the collection labelled "connections". The connection has a connection ID ("d2364..."). Furthermore, a document (labelled "f97e...") is stored under "data" associated with the connection. This document is the group-specific connection data object of the user that created the group/connection. Any data comprised in the connection data object cannot be accessed by the server, as it is stored only in encrypted form, as shown, for example, in Figure 7f.

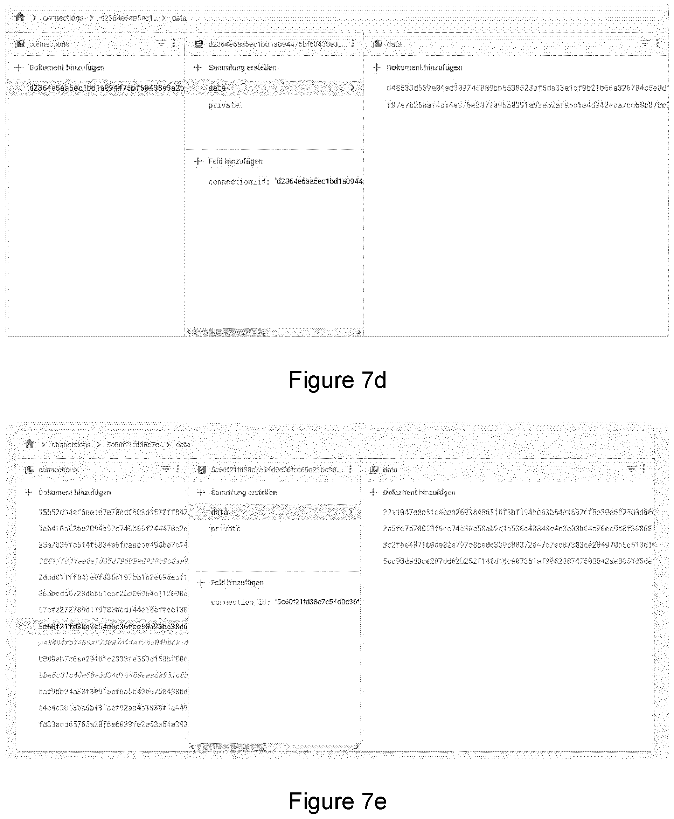

Figure 7d shows a state where a second user has been added to the group. There are now two documents stored under "data" associated with the connection. The additional document (labelled "d485....") is the group-specific connection data object of a second member of the group.

Figure 7e shows a state where multiple connections are stored on the server and where, as an example, one of the connections (labelled "5c60...") has four documents stored under "data", each being the encrypted connection data object of one of the members of the group. That is the group has four members.

Figure 7f exemplifies what happens when a group member changes their contact information. Their connection data object (labelled "5cc90...") is locally modified and encrypted with the connection key (not shown). The server only sees the modified connection data object in encrypted form. Thus, while a difference is visible in the encrypted data on the server, the server cannot determine from the encrypted connection data object which user has modified their contact information or any of the content of the modified connection data object.

When, as briefly explained above, the mobile device of a user queries the server for data concerning the group, the server may provide connection data objects of the group to the mobile device. For example, it may provide all connection data objects of the group to the mobile device, e.g. as a packed folder, or it may only send modified connection data objects of the group to the mobile device. The latter reduces data overhead provided to the devices, while the former is advantageous in that it does not require tracking of whether and/or when a connection data object has changed.

In the following, exemplary data structures that may be used for any of the above described methods will be described.

On the mobile device, the contact information of each member of the group may be provided in accordance with a data model that may, for example, include one or more of first and last name, a company, a website, a nickname, images, ringtones, addresses, email addresses, birthdate of the member, and optionally notes associated with the member. This information is not stored in clear text on the server. Instead, all the information, in other words the entire data model, may be encrypted and only the encrypted data is provided to and stored on the server. As an example, a data model, for example a JSON model, may be generated from the contact information and converted into a string, which is then encrypted using the symmetric connection key. The encrypted data is then sent, particularly pushed, to the server. The encrypted string may be pulled from the server by the respective mobile devices of the group members, decrypted using the symmetric connection key, converted to a data model, for example a JSON model for use in adding and/or deleting and/or updating the contact information stored on the mobile device. Encrypting the entire model provides extra security and reduces the resource cost when decrypting data on the mobile device. It also permits live updates.

As an example, on the server, there may be collections, e.g., in the present example an accounts collection and a connections collection. The accounts collection may comprise, for each user, any connection IDs identifying groups which the user is a member of, keys for the connections in encrypted form, data of the connections in encrypted form, profile data, data on other users using the application, all outgoing requests, and/or all incoming requests. The connections collection may comprise, for each connection, connection data objects of the members in that connection and a secret key.

The server may use the secret key of the connection to verify whether a user is authorized to add members to a connection/group. Each member of a connection/group that has the secret key can enable other users to join the connection, particularly to access group data using the connection key. For this reasons, as outlined above, only administrators in a group connection may be provided with the secret key.

When it comes to the data structure on the server, an example for at least part of the data structure is shown in and has been described in the context of Figures 7a to 7f.

The server may only know, for each user/account, the phone number, the account ID, and the public key. In addition, the server may know the number of members within a group connection due to there being a corresponding number of connection data objects associated with the connection. Apart from that, the server does not know anything about the members or the connection itself. The server, in this regard, only contains what would appear to be randomly generated strings. Accordingly, the server can at best determine that there has been a change in a specific group and may respond to a query accordingly, but the server cannot provide specific data pertaining to the change, e.g., the user whose data has been changed or what change has occurred. The user may subscribe, via an application on their mobile device to receive push notifications, e.g., by subscribing to connections that are connected to them, i.e., connections associated with groups of which they are a member. This is handled locally at the user's mobile device, as the server does not have access to the required information, particularly, of the members of connections.

In terms of access to the data, any given user can see, via the application, all the data under the accounts collection and the data under connections collection concerning the user and any other user who is a fellow member of a group.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A computer-implemented method for synchronization of contact information supporting a group function, the method comprising:
automatically adding and/or deleting and/or updating, on a respective mobile device (3, 4, 5) of each member of a group of users, contact information of one or more members of the group locally on the mobile device in response to determining that a change in group data has occurred, wherein the group data comprises contact information of each of the members of the group, wherein, for each member of the group, a group-specific connection data object comprising the contact information of the member is stored on a server (2) in encrypted form; and
at the respective mobile device of each of the members of the group, downloading and decrypting at least one of the connection data objects,
wherein the automatically adding and/or deleting and/or updating of the contact information is carried out in accordance with the contact information comprised in the at least one of the connection data objects, and
wherein the server does not know which users are members of the group.

2. The method according to claim 1, wherein the method provides a single encrypted group connection based on a one-on-one connection model.

3. The method according to claim 1 or 2, wherein the method comprises after downloading the at least one of the connection data objects from the server, for each downloaded connection data object, determining whether the connection data object comprises modified contact information, and, in response to determining that the connection data object comprises modified contact information, automatically adding and/or deleting and/or updating contact information of the member whose connection data is comprised in the connection data object.

4. The method according to any of the preceding claims, wherein the method comprises, at the mobile device of at least one member of the group, modifying the connection data object of the at least one member of the group by modifying at least a portion of the connection data of the at least one member, so as to obtain a/the modified connection data object, encrypting the modified connection data object, and uploading the modified connection data object to the server in encrypted form.

5. The method according to any of the preceding claims, wherein the connection data object is encrypted with a connection key and the connection key is provided as part of a request to join the group, the request to join the group optionally being encrypted using a public key of the user receiving the request to join the group and/or optionally comprising a signature to validate that the request originates from the requesting user.

6. The method of any of the preceding claims further comprising creating a group, wherein creating a group comprises, in response to a first user requesting to create a group, creating a first connection data object including the contact information of the first user, creating a connection ID identifying the group, creating a/the connection key, encrypting the first connection data object, uploading the encrypted first connection data object to the server, and adding one or more users to the group.

7. The method of any of the preceding claims, comprising adding at least a second user to the group, wherein adding the second user to the group comprises sending a request to join the group to the second user, the request to join the group being encrypted using a public key of the second user and comprising a/the connection key and optionally a signature of the requesting user, in particular the first user.

8. The method of any of the preceding claims comprising adding at least a/the second user to the group, wherein adding the second user to the group comprises, at the mobile device of the second user, receiving a/the request to join the group, decrypting the request to join the group using a private key of the second user, and receiving a/the connection key,
the method optionally comprising, after the second member has been added to the group, at the mobile device of the second user, downloading and decrypting the connection data object of each of the other members of the group and optionally automatically adding and/or deleting and/or updating contact information of one or more of the other members of the group locally on the mobile device of the second user.

9. The method of any of the preceding claims comprising adding at least a/the second user to the group, wherein adding the second user to the group comprises, at the mobile device of the second user, creating a connection data object and adding contact information of the second user to the connection data object, encrypting the connection data object using a/the connection key, and uploading the connection data object to the server in encrypted form,
the method optionally comprising, after the second member has been added to the group, at the mobile device of the second user, downloading and decrypting the connection data object of each of the other members of the group and optionally automatically adding and/or deleting and/or updating contact information of one or more of the other members of the group locally on the mobile device of the second user.

10. The method of any of the preceding claims, comprising, after adding a/the second user to the group, automatically determining, on the respective mobile device of each member of the group, whether a contact information entry comprising at least some contact information of the second user is locally stored on the mobile device, and
in case a contact information entry comprising at least some contact information of the second user is locally stored on the mobile device, automatically adding information indicating that the second user is a member of the group to the contact information entry and optionally automatically adding contact information of the second user to the contact information entry and/or deleting and/or updating at least a portion of the contact information of the second user comprised in the contact information entry, and
in case no contact information entry comprising at least some contact information of the second user is locally stored on the mobile device, automatically creating a contact information entry for the second user to be locally stored on the mobile device and adding the contact information of the second user comprised in the connection data object to the contact information entry for the second user, and automatically adding information indicating that the second user is a member of the group to the contact information entry.

11. The method of any of the preceding claims, comprising, upon adding a/the second user to the group, on the mobile device of the second user, automatically determining, for each of the other members of the group, whether a contact information entry comprising at least some contact information of the other member is locally stored on the mobile device, and
in case a contact information entry comprising at least some contact information of the other member is locally stored on the mobile device, automatically adding information indicating that the other member is a member of the group to the contact information entry and optionally automatically adding contact information of the other member to the contact information entry and/or deleting and/or updating at least a portion of the contact information of the other member comprised in the contact information entry, and
in case no contact information entry comprising at least some contact information of the other member is locally stored on the mobile device, automatically creating a contact information entry for the other member to be locally stored on the mobile device and adding the contact information of the other member comprised in the connection data object to the contact information entry for the other member, and automatically adding information indicating the other member is a member of the group to the contact information entry.

12. The method of any of the preceding claims, wherein automatically adding and/or deleting and/or updating contact information comprises creating and/or editing a/the contact entry in a contact management application, the adding and/or deleting and/or updating being performed taking into account the data model of the contact management application.

13. A system (1) comprising means for carrying out the method of any of the preceding claims, in particular, comprising a/the server (2) and/or a/the mobile device (3, 4, 5) of one or more members of the group.

14. A computer program product comprising instructions which, when the program is executed by a computing system, cause the computing system to carry out the method of any one of claims 1 to 12.

15. A computer-readable medium comprising instructions which, when executed by a computing system, cause the computing system to carry out the method of any one of claims 1 to 12.

## Amended claims

### Amended claims in accordance with Rule 137(2) EPC.

1. A computer-implemented method for synchronization of contact information supporting a group function, the method comprising:
automatically adding and/or deleting and/or updating, on a respective mobile device (3, 4, 5) of each member of a group of users, contact information of one or more members of the group locally on the mobile device in response to determining that a change in group data has occurred, wherein the group data comprises contact information of each of the members of the group, wherein, for each member of the group, a group-specific connection data object comprising the contact information of the member is stored on a server (2) in encrypted form; and
at the respective mobile device of each of the members of the group, downloading and decrypting at least one of the connection data objects,
wherein the automatically adding and/or deleting and/or updating of the contact information is carried out in accordance with the contact information comprised in the at least one of the connection data objects, and
wherein the server does not know which users are members of the group.

2. The method according to claim 1, wherein the method provides a single encrypted group connection, which is a single connection connecting all members of the group, based on a one-on-one connection model.

3. The method according to claim 1 or 2, wherein the method comprises after downloading the at least one of the connection data objects from the server, for each downloaded connection data object, determining whether the connection data object comprises modified contact information, and, in response to determining that the connection data object comprises modified contact information, automatically adding and/or deleting and/or updating contact information of the member whose connection data is comprised in the connection data object.

4. The method according to any of the preceding claims, wherein the method comprises, at the mobile device of at least one member of the group, modifying the connection data object of the at least one member of the group by modifying at least a portion of the connection data of the at least one member, so as to obtain a/the modified connection data object, encrypting the modified connection data object, and uploading the modified connection data object to the server in encrypted form.

5. The method according to any of the preceding claims, wherein the connection data object is encrypted with a connection key and the connection key is provided as part of a request to join the group, the request to join the group optionally being encrypted using a public key of the user receiving the request to join the group and/or optionally comprising a signature to validate that the request originates from the requesting user.

6. The method of any of the preceding claims further comprising creating a group, wherein creating a group comprises, in response to a first user requesting to create a group, creating a first connection data object including the contact information of the first user, creating a connection ID identifying the group, creating a/the connection key, encrypting the first connection data object, uploading the encrypted first connection data object to the server, and adding one or more users to the group.

7. The method of any of the preceding claims, comprising adding at least a second user to the group, wherein adding the second user to the group comprises sending a request to join the group to the second user, the request to join the group being encrypted using a public key of the second user and comprising a/the connection key and optionally a signature of the requesting user, in particular the first user.

8. The method of any of the preceding claims comprising adding at least a/the second user to the group, wherein adding the second user to the group comprises, at the mobile device of the second user, receiving a/the request to join the group, decrypting the request to join the group using a private key of the second user, and receiving a/the connection key,
the method optionally comprising, after the second member has been added to the group, at the mobile device of the second user, downloading and decrypting the connection data object of each of the other members of the group and optionally automatically adding and/or deleting and/or updating contact information of one or more of the other members of the group locally on the mobile device of the second user.

9. The method of any of the preceding claims comprising adding at least a/the second user to the group, wherein adding the second user to the group comprises, at the mobile device of the second user, creating a connection data object and adding contact information of the second user to the connection data object, encrypting the connection data object using a/the connection key, and uploading the connection data object to the server in encrypted form,
the method optionally comprising, after the second member has been added to the group, at the mobile device of the second user, downloading and decrypting the connection data object of each of the other members of the group and optionally automatically adding and/or deleting and/or updating contact information of one or more of the other members of the group locally on the mobile device of the second user.

10. The method of any of the preceding claims, comprising, after adding a/the second user to the group, automatically determining, on the respective mobile device of each member of the group, whether a contact information entry comprising at least some contact information of the second user is locally stored on the mobile device, and
in case a contact information entry comprising at least some contact information of the second user is locally stored on the mobile device, automatically adding information indicating that the second user is a member of the group to the contact information entry and optionally automatically adding contact information of the second user to the contact information entry and/or deleting and/or updating at least a portion of the contact information of the second user comprised in the contact information entry, and
in case no contact information entry comprising at least some contact information of the second user is locally stored on the mobile device, automatically creating a contact information entry for the second user to be locally stored on the mobile device and adding the contact information of the second user comprised in the connection data object to the contact information entry for the second user, and automatically adding information indicating that the second user is a member of the group to the contact information entry.

11. The method of any of the preceding claims, comprising, upon adding a/the second user to the group, on the mobile device of the second user, automatically determining, for each of the other members of the group, whether a contact information entry comprising at least some contact information of the other member is locally stored on the mobile device, and
in case a contact information entry comprising at least some contact information of the other member is locally stored on the mobile device, automatically adding information indicating that the other member is a member of the group to the contact information entry and optionally automatically adding contact information of the other member to the contact information entry and/or deleting and/or updating at least a portion of the contact information of the other member comprised in the contact information entry, and
in case no contact information entry comprising at least some contact information of the other member is locally stored on the mobile device, automatically creating a contact information entry for the other member to be locally stored on the mobile device and adding the contact information of the other member comprised in the connection data object to the contact information entry for the other member, and automatically adding information indicating the other member is a member of the group to the contact information entry.

12. The method of any of the preceding claims, wherein automatically adding and/or deleting and/or updating contact information comprises creating and/or editing a/the contact entry in a contact management application, the adding and/or deleting and/or updating being performed taking into account the data model of the contact management application.

13. A system (1) comprising means for carrying out the method of any of the preceding claims.

14. The system of claim 13, comprising a/the server (2) and/or a/the mobile device (3, 4, 5) of one or more members of the group.

15. A computer program product comprising instructions which, when the program is executed by a computing system, cause the computing system to carry out the method of any one of claims 1 to 12.

16. A computer-readable medium comprising instructions which, when executed by a computing system, cause the computing system to carry out the method of any one of claims 1 to 12.
